# EUROPEAN PATENT APPLICATION

(11) **EP 0 896 169 A1**
(43) Date of publication of application: **10.02.1999**
(21) Application number: 98305924.7
(22) Date of filing: 24.07.1998
(51) Int. Cl.: F16G 11/12

(54) **Composite article and method of making a composite article**

(30) Priority: 06.08.1997 US 908138
(71) Applicant: AMSTED Industries Incorporated, Chicago Illinois 60601 (US)
(72) Inventor: Foley, William L., Libertyville, Illinois 60048 (US); Osswald, Tim A., Madison, Wisconsin 53711 (US); Bush, John D., Kenosha, Wisconsin 53143 (US)
(74) Representative: Davies, Christopher Robert

(57) **Abstract**

A composite article (10) is disclosed. The composite article (10) has a pair of spaced fittings (12) with outer surfaces (16). Each fitting (12) has a fiber support (42) at its outer surface (16). A composite body (14) connects the two fittings (12) and extends over the fiber supports (42) on the fittings (12). The composite body (14) includes an elongate fiber (40) extending between the fittings (12) and over the fiber supports (42) on the fittings (12). The body (14) also includes a matrix (41) around the fiber (40). The composite article (10) may be a turnbuckle. The fittings (12) may be end fittings (12) with threaded interior surfaces (11), the fiber supports (42) on the two end fittings (12) being aligned with each other. Each fiber support (42) may comprise a pair of flanges (44) extending out from the outer surface (16) of the end fitting (12) and a pin (46) extending between the flanges (44) spaced from the outer surface (16) of the end fittings (12). Alternative fiber supports (42) are disclosed, such as a fiber support (42) providing a shoulder (50) extending outward from the outer surface (16) of the end fitting (12). Each shoulder (50) may have a curved support surface (52) and a retaining lip (54), with the elongate fiber (40) extending over the curved support surfaces (52) between the retaining lips (54) and outer surfaces (16) of the end fittings (12). A method of making composite bodies (14) is also disclosed. Fittings (12) having fiber supports (42) are provided, along with an elongate fiber (40). The fittings (12) are placed in a spaced relationship with their fiber supports (42) aligned. The elongate fiber (40) is placed on the fiber supports (42) of the two fittings (12). A matrix material (41) is introduced over the pair of fittings (42) and elongate fiber (40) and allowed to set over the fittings (12) and elongate fibers (40) to form a body (14) connecting the two fittings (12).

## Description

The present invention relates to composite bodies, and in particular, to composite turnbuckles to be used with the standing riggings of sailing ships, and to a method of making such composite bodies.

Turnbuckles are known in the art, and have been used for tightening a rod, strand or rope. Typical turnbuckles are made of metal, such as steel or brass, and typically have two threaded ends which receive the threaded ends of rods or the like. The threaded ends are threaded in opposite hand, so that by turning the turnbuckle the rods, strands or ropes on both ends may be loosened or tightened.

Turnbuckles have been used in sailing ships for pre-loading the mast or masts in tension. A ship's standing rigging, such as the side stays that hold up the mast or masts, may be placed in tension to thereby place the mast or masts in tension by tightening turnbuckles attached to the stays. Loads of 100 - 30,000 pounds (45 - 13600 kg) or more are typically placed on the turnbuckle.

The turnbuckles used on the side stays in sailing vessels may be located several feet above the water line, particularly if the mast has one or more spreaders. These metal turnbuckles therefore contribute not only to the overall weight of the ship, but also affect the center of gravity and overall stability of the ship. In so doing, the metal turnbuckles contribute to problems with moments and produce a multiplier effect due to the distance above the water line, requiring a higher weight keel to overcome the effects of the moments and multiplier.

In addition, the metal turnbuckles have been subject to oxidation, reducing their useful lives and detracting from the appearance of the products. This oxidation problem is worsened in the harsh environments encountered in sailing, particularly in the ocean sailing environment.

Such prior art turnbuckles have typically been made by casting the entire metal turnbuckle as one piece.

The present invention provides a turnbuckle of sufficient strength in tension to be used with the standing rigging of a ship, such as with the side stays, while substantially decreasing the weight of the turnbuckle.

In one aspect, the present invention provides a composite article comprising a pair of spaced fittings. Each fitting has a support member. A body connects the two fittings and extends over the support members on the fittings. The body includes an elongate member extending between the support members on the fittings. The body also includes a matrix around the elongate member. The fittings may be made of metal.

In another aspect, the present invention provides a turnbuckle comprising a pair of coaxial and spaced annular end fittings having outer surfaces and threaded interior surfaces. Each end fitting has a pair of fiber supports at its outer surface. Each fiber support is aligned with a fiber support on the opposite end fitting and comprises a pair of flanges extending outward from the outer surface of the end fitting; a pin extends between the flanges and is spaced from the outer surface of the end fitting. A body connects the two end fittings and extends over the fiber supports on the end fittings. The body includes an elongate fiber that extends between the end fittings and over the pins of the aligned fiber supports on the end fittings. A matrix is around the elongate fibers. The end fittings may be made of metal.

In another aspect the present invention provides a turnbuckle comprising a pair of coaxial and spaced annular end fittings having outer surfaces and threaded interior surfaces. Each end fitting has a pair of fiber supports at its outer surface. Each fiber support is aligned with a fiber support on the opposite end fitting and comprises a shoulder extending outward from the outer surface of the end fitting. The shoulder has a curved support surface and a retaining lip. A body connects the two end fittings and extends over the fiber supports on the end fittings. The body includes an elongate fiber that extends between the end fittings and over the curved support surfaces of the aligned shoulders between the retaining lips and the outer surfaces of the end fittings. A matrix is around the elongate fibers. The end fittings may be made of metal.

In another aspect the present invention provides a method of making a composite article comprising the steps of providing a pair of fittings each with an outer surface having a fiber support, and providing an elongate fiber. The fittings are placed in a spaced relationship. The elongate fiber is placed to extend between the fiber supports of the two fittings. A matrix material is introduced over the pair of fittings and elongate fiber and allowed to set over the fittings and elongate fiber.

Various embodiments of the present invention will now be described, by way of example only, and with reference to the accompanying drawings in which:

FIG. 1 is a perspective view of an embodiment of a composite turnbuckle.

FIG. 2 is a perspective view of an end fitting suitable for use with the composite turnbuckle of FIG. 1.

FIG. 3 is a perspective view of one stage of production of a composite turnbuckle, showing two end fittings of the type shown in FIG. 2 and with elongate fibers looped, wound or wrapped over the end fittings and without a matrix material.

FIG. 4 is a perspective view of another embodiment of an end fitting that may be used with the turnbuckle of FIG. 1.

FIG. 5 is a perspective view of one stage of production of a composite turnbuckle, showing the two end fittings of FIG. 4 and with elongate fibers wound or wrapped over the end fittings and without a matrix material.

FIG. 6 is a partial top plan view of the composite turnbuckle of FIG. 1 using the end fitting of FIG. 4.

FIG. 7 is a partial side elevation of the composite turnbuckle of FIG. 1, using the end fitting of FIG. 4.

FIG. 8 is a perspective view of an alternate end fitting structure.

FIG. 9 is a perspective view of an alternate end fitting structure.

FIG. 10 is a perspective view of an alternate end fitting structure.

The composite turnbuckles 10 of the present invention include a pair of spaced annular end fittings 12 and a body 14 surrounding and extending between the end fittings 12. The illustrated end fittings 12 are annular and are made of metal, such as brass or steel, and each has an interior threaded surface 11. The end fittings are spaced and have a common central axis 13. The interior threads of the end fittings are of opposite hand so that turning the turnbuckle in one direction or the other will loosen or tighten the connection with a rope or rod extending axially through the open interior of the end fittings. The end fittings 12 have outer surfaces 16, as shown in FIGS. 2-5 and 8-10, outward faces 18 and inward faces 20.

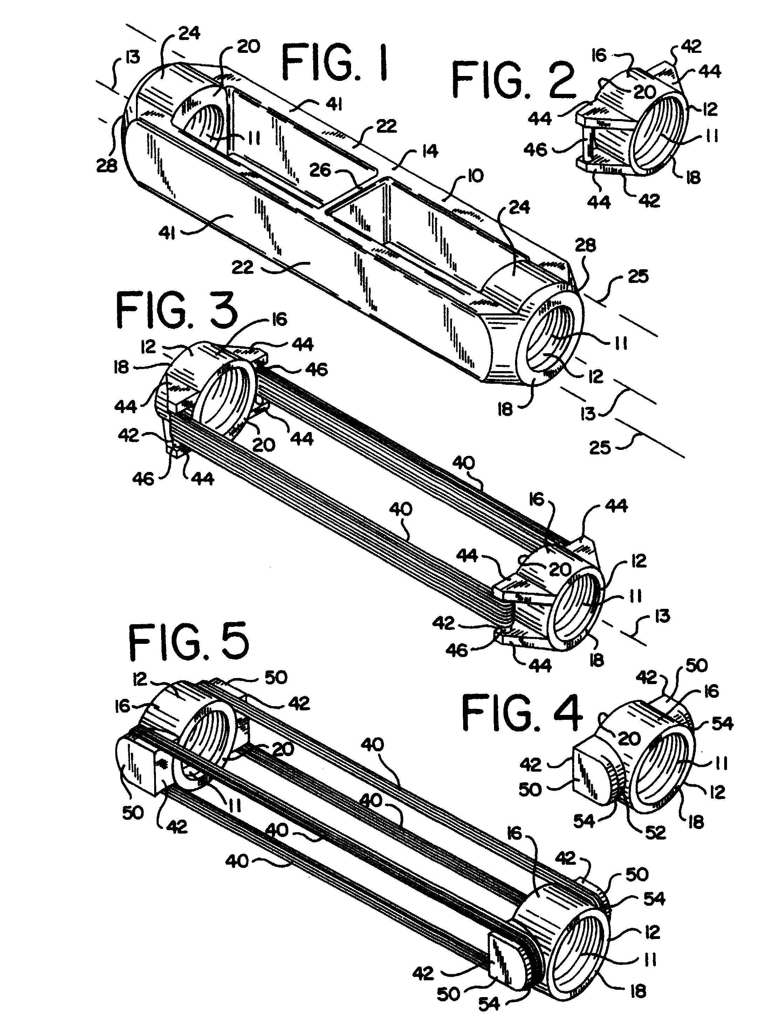

The body 14 of the illustrated turnbuckle includes a pair of side arms 22, integral end jackets 24 surrounding the outer walls 16 of the end fittings 12, and an integral bridge 26 joining the arms 22 midway between the end fittings. The side arms 22 are spaced apart and are parallel to each other. The side arms extend between the end jackets 24, and have longitudinal axes 25 parallel to the common central axis 13 of the end fittings 12. All of the body 14 may be formed of a fiber reinforced material that preferably bonds with the outer surface 16 of each end fitting 12. The two outward ends 28 of the illustrated body have a reduced diameter, and the width of the arms 22 is less than the widest diameter of the jacket 24, as shown in FIGS. 1 and 6-7. It should be understood that the turnbuckle body may have a different shape than that illustrated; for example, instead of two arms and an integral bridge between the end fittings, the turnbuckle body may be a solid structure. The turnbuckle may be longer, shorter, thicker, or thinner than illustrated, and the ends need not be tapered as shown. Moreover, the end jackets 24 may cover the ends 18, 20 of the fittings 12 or leave them exposed; other parts of the fittings 12 could also be exposed or covered.

The illustrated body 14 is made of a composite material that comprises a fiber reinforced material. Examples of suitable reinforcing fiber material that may be used to form the composite body of the present invention are continuous elongate fibers such as aramid fibers sold under the trademark KEVLAR by E.I. DuPont deNemours & Co., Inc. of Wilmington, Delaware, and any thermoplastic fiber such as UHMWHDPE (ultra high molecular weight high density polyethylene) fibers sold under the trademark SPECTRA by Allied Signal Inc., of Morristown, New Jersey and Colonial Heights, Virginia. Other fiber materials may also be used, such as carbon fiber or glass fiber. Suitable carbon fibers include those available from Amoco Performance Polymers of Apharetta, Georgia; suitable glass fibers include those available from Owens Corning of Toledo, Ohio. Preferably, the reinforcing fiber material is one that when embedded in a matrix gives sufficient tensile strength and minimal creep so that the end product will withstand at least the expected loads with a creep rate that yields a product with an acceptable useful life. It should be understood that commercial fiber materials are identified for purposes of illustration only, and the invention is not limited to those products. It should also be understood that chopped fibers may be used in addition to elongate fibers; the chopped fibers may be of the same materials identified above.

The elongate fibers and end fittings 12 may be encapsulated in a molded matrix or resin 41. Examples of suitable matrix or resin materials include, for example, thermoplastic or thermosetting resin. Thermoplastic resins are those that harden by lowering their temperature below the glass transition temperature (amorphous thermoplastics) or below their melting temperature (semi-crystalline thermoplastics). Examples of suitable thermoplastic resins include polycarbonate resins such as LEXAN available from GE Plastics (GE Company) of Pittsfield, Massachusetts, CALIBRE available from the Dow Chemical Co. of Midland, Michigan, and MAKROLON available from the Bayer Corporation Polymer Divisions of Pittsburgh, Pennsylvania. Other suitable thermoplastic matrix material includes acrylics such as ACRYLITE available from CYRO Industries of Rockaway, New Jersey, and polyamide 66 such as ZYTEL available from DuPont Engineering Polymers (E.I. DuPont deNemours & Co., Inc.) of Wilmington, Delaware and ASHLENE available from Ashley Polymers, Inc. of Brooklyn, New York. Suitable thermoplastics also include polyacetals such as CELCON available from Hoest Celanese Corp. - Technical Polymers of Summit, New Jersey and DELRIN available from DuPont Engineering Polymers (E.I. DuPont deNemours & Co., Inc.) of Wilmington, Delaware. Polybutylene teraphthalate PBT may also be used. Thermoset resin or matrix materials are those that harden after undergoing a chemical reaction or cure, wherein the molecules cross-link to render a material that cannot by re-melted and reused. Examples of suitable thermoset resins include epoxy, vinyl ester and unsaturated polyester. A suitable epoxy is FARBOSET available from Farboil Company of Baltimore, Maryland; a suitable vinyl ester is KINEL available from the Ciba-Geigy Corporation of Brewster, New York; and a suitable unsaturated polyester is ROSITE available from the Rostone Corporation of Lafayette, Indiana. These thermoplastic and thermoset matrix materials are generally available in different grades, and the grade may be selected based upon design parameters for the turnbuckle. Generally, any suitable or desirable matrix material may be used that is compatible with the elongate reinforcing fiber and end fittings selected. The matrix material may include standard fillers such as glass beads, ceramic powder and mineral filler, and may also include chopped reinforcing fiber. Preferably the matrix material will bond to the outer surfaces 16 of the end fittings 12. It should be understood that these commercial matrix materials are identified for purposes of illustration only, and the present invention is not limited to those products. The matrix material, the fiber material, any filler, and end fitting material may be selected to produce a product that meets design parameters.

The present invention provides support members comprising fiber supports 42 on the end fittings on which the elongate members or fibers 40 may be placed by winding, wrapping, looping fibers, or by positioning loops of fibers. As shown in FIGS. 2-10, the end fittings 12 may have a pair of fiber supports 42 at the outer surfaces 16 of the end fittings 12, with elongate fibers 40 extending between the fittings 12 and over the fiber supports 42, as shown in FIGS. 3 and 5. It may be preferred to have a single elongate fiber 40 extend over each fiber support more than once, as it is expected that the tensile strength of the composite body and its resistance to creep may be related to the number of wraps of the elongate fiber; creep may also be expected to be related to the length of the elongate fibers, with longer fibers being expected to result in less creep. Several elongate fibers 40 may be wrapped over the supports 42, and the wrapped elongate fibers could be used in combination with short randomly dispersed fibers in the matrix, with the matrix alone, with the matrix and filler, or with the matrix and filler and short reinforcing fiber, and the term "composite" as used herein is intended to include all of these variations. The elongate members 40 need not all be of the same material: several different materials could be combined, and the body could include lengths of wire, for example, in addition to or in place of the elongate aramid, glass, carbon or thermoplastic fibers.

As shown in FIGS. 3 and 5, the elongate fibers 40 may be supported on two diametrically opposed fiber supports 42 on the end fittings 12. The fiber supports 42 on the opposite end fittings are preferably aligned, as shown in FIGS. 3 and 5, with the elongate fibers 40 along the longitudinal axis 25 of the side arms 22 of the body 14.

Examples of fiber supports 42 that may be beneficially used with the present invention are shown in FIGS. 2-5 and 8-10. These illustrated fiber supports 42 define support members or surfaces on which the elongate members or fibers may be placed: the reinforcing fibers may be wrapped, wound or looped on the two end fittings as shown in FIGS. 3 and 5, or preformed fiber loops may be positioned on the supports. In the end fitting of FIG. 2, each fiber support 42 comprises a pair of flanges 44 extending outward from the outer surface 16 of the end fitting 12, with a cylindrical pin 46 extending between the flanges. The pin 46 is spaced from the outer surface 16 of the end fitting. An identical pair of flanges 44 and pin 46 are diametrically opposed to the first set. The other end fitting has the same fiber support structures so that the elongate reinforcing fiber may be placed on the pins to extend between the spaced end fittings. Thus, at least a portion of the pin 46 is spaced from the outer surface 16 of the fitting, and the elongate fiber 40 extends over this portion of the pin. The spaced portions of the pins 46 comprise rounded support surfaces for the elongate fibers.

In the end fitting of FIG. 4, there are a pair of diametrically opposed shoulders 50 on the outer surface 16 of each end fitting 12. The outwardly directed part of each shoulder has a rounded support surface 52 to receive and hold a plurality of elongate fibers 40. Outward movement of the elongate fibers is limited by an upstanding retaining lip 54. Thus, as shown in FIG. 5, the elongate fibers 40 are between the retaining lip 54 and the outer surface 16 of the end fitting 12. The radius of curvature of the support surface 52 may be set to minimize stresses on the elongate fibers.

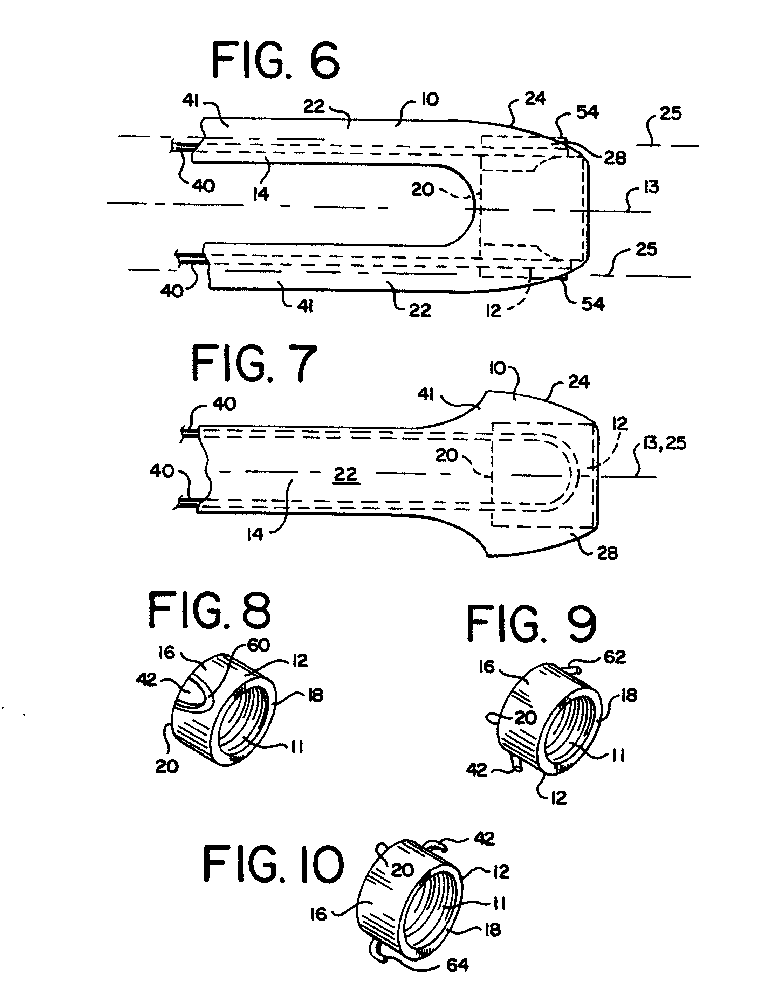

As shown in FIGS. 8-10, other structures could be used as fiber supports 42. There could be a curved groove 60 machined into the outer surface 16 of the end fittings 12 as shown in FIG. 8. A pair of cylindrical pins 62 could be set into the outer surface 16 of the end fittings 12 as shown in FIG. 9; the pins could be angled upwards as shown or could extend straight outwardly. Or a pair of hooks 64 could be set to extend outwardly from the outer surface 16 of the end fittings 12 as shown in FIG. 10. Other structures could also be employed as fiber supports.

The fiber support'42 may be shaped so that a mating lip is formed in the surrounding jacket to limit axial movement of the end fitting. It may be desirable to combine the fiber supports 42 of FIGS. 2, 4 and 8-10 with a structure that provides an interference fit between the body and end fitting to further strengthen the end fitting/body interface against tension. Such a structure could include one or more indentations, grooves or notches in the outer surface 16 of the end fitting 12 and an inwardly expanding outer diameter of the end fitting. Such a groove could be beveled in one or two directions to further aid in providing this interference fit. Such a structure could also include one or more ridges, shoulders, bumps or flanges extending out from the outer surface 16 of the end fitting 12. Mating surfaces formed in the jacket 24 surrounding the end fitting 12 outer surface 16 could provide a further limitation against axial movement of the end fittings. Structures providing such an interference fit against axial movement are disclosed in the United States Patent Application entitled "Turnbuckle and Method of Making a Turnbuckle" filed 6 August 1997 by John D. Bush and William L. Foley and assigned to Amsted Industries, Inc.

The illustrated fiber supports 42 and mating jacket 24 are also advantageous in limiting or preventing relative rotation between the end fittings 12 and the body 14. It may also be desirable to use fiber supports in conjunction with features of commercially available fittings, such as those supplied by Penn Engineering & Manufacturing Corp. of Danboro, Pennsylvania, P.S.M. Fastener Corporation of Fairfield, New Jersey, and the 150 series of fasteners supplied by the Witten Company, Inc. of Owasso, Oklahoma. And while the illustrated fittings and fiber supports are made of metal, it should be understood that the principles of the present invention may be applicable to bodies with fittings and fiber supports made of other materials.

The present invention may be made by setting the end fittings 12 and elongate fibers 40 in a suitable mold or die cavity, and then introducing the uncured or liquid matrix material over the end fittings and elongate fibers in the cavity. The matrix material may then be allowed to cure or harden to a solid form. The matrix material, which may be a thermoplastic or thermoset resin, may be introduced into the cavity by known injection molding or resin transfer molding processes, and the form of solidification will depend on the type of materials used. Reinforcing materials or fillers may be present in the matrix as it is introduced into the mold or die. Reinforcing materials may comprise, for example, short randomly disposed and dispersed glass fibers in the matrix material.

For injection molding, known pressurized and heated screw feed equipment may be used to introduce the matrix material into the mold cavity. For resin transfer molding, a thermosetting matrix material is generally used and introduced into the mold cavity using known equipment. The viscosity of the matrix material preferably remains low during injection so that the matrix material may move through a bed of fibers in the mold without excessive heat or pressure.

In either injection molding or resin transfer molding, the elongate reinforcing fibers 40 may be inserted into the mold or die cavity together with the end fittings 12 before introducing the uncured or liquid matrix material. The reinforcing fiber may comprise a fiber preform, with elongate fibers 40 placed over the fiber supports 42, such as by winding or wrapping the elongate fibers 40 over the aligned pins 46 or shoulders 50 as shown in FIGS. 3 and 5. The fiber preform may also comprise a combination of elongate fibers 40 placed over the fiber supports together with randomly disposed fibers, either elongate or chopped. Other fiber preform structures may also be used; for example, preformed loops of elongate fibers 40 may be placed on the pins 46 or shoulders 50, with or without additional reinforcing fiber. With the combination placed in a suitable mold or die, liquid matrix material may then be introduced into the mold or die to encapsulate or extend through the bed of fibers, and the liquid matrix may be allowed to cure to form the reinforced composite shown in FIGS. 1, 6 and 7. For the embodiment of FIG. 3, the winding or wrapping may be done over the pins 46 separate from the end fitting 12, with the pins later press fit into the flanges 44. The use of a random arrangement of reinforcing material in a matrix is disclosed in the United States Patent Application entitled "Turnbuckle and Method of Making a Turnbuckle" filed 6 August 1997 by John D. Bush and William L. Foley and assigned to Amsted Industries, Inc.

The present invention may be used in the same manner as a prior art turnbuckle. In use on a sailing ship, ends of rigging rope may be inserted through each opening in each end fitting 12 of the turnbuckle 10 and the turnbuckle turned as in the prior art to tighten the rigging to place the rigging and mast in tension. The weight of the composite turnbuckle of the present invention is expected to be about one-fourth of the weight of a similarly-sized metal turnbuckle. Since the turnbuckle of the present invention is of much lighter weight than the prior art metal turnbuckles, the center of gravity of the ship or boat is not as high with the present invention, and the weight of the ship or boat is decreased. And since significantly less metal is used, oxidation is less problematic.

Different sizes of turnbuckles may be produced with different internal diameters. It may be desirable, for example, to produce turnbuckles of two body sizes and a range of thread sizes, for example, eight thread sizes, so that one die may be used to produce turnbuckles for different size boats and for different loads. It may be most efficient to have one body size for several different thread sizes, for example, with one die or mold for a body to be used with end fittings accepting one-quarter inch (0.635 cm), three-eighths inch (0.953 cm), five-sixteenths inch (0.794 cm) and three-quarter inch threads (1.905 cm).

It may also be desirable to produce turnbuckles of several different body sizes. With a range of body sizes, with a range of strength ratings, designers of structures using the turnbuckles will be given a greater range of choices. Moreover, turnbuckles with different strength ratings can be produced within a given range of body sizes by varying the number of loops of elongate fibers wrapped over the fiber supports.

In the prior art, typical one-piece all-metal turnbuckles for use in marine environments, such as in ship riggings, have been made to accept wire diameters of from about 3/32 inch (0.238 cm) to about 7/16 inch (1.111 cm), and rod or pin diameters of from about 1/4 inch (0.635 cm) up to about 3/4 inch (1.905 cm). Tensile strengths of these commercially available all-metal marine turnbuckles have ranged from about 3300 lbs (1500 kg) up to about 29,000 lbs (13150 kg), with working loads being limited to about 40% of the tensile strength. To have utility in this environment of use, the composite turnbuckle of the present invention should exhibit a similar range of tensile strengths at lower weights. To assure meeting these tensile strengths, the matrix material, reinforcing material, shape of the body, and shape, strength and material of the end fittings may be adjusted. It may also be desirable to thicken the jacket 24 surrounding the end fitting 12 to further strengthen the turnbuckle against pull-out of the end fitting. The weight and sizes of the remaining parts of the composite body 14, such as the arms 22, may also be adjusted to minimize the weight while achieving the desired tensile strength. For the purpose of minimizing weight, it may be desirable to provide a variety of body sizes for the turnbuckles.

The turnbuckles of the present invention can also be used as tension, connecting or anchoring members in other environments. For example, it is expected that the turnbuckles of the present invention may be used with guy wires, or in other areas where light weight and resistance to oxidation are desirable. It is expected that the present invention may also be used to produce other types of composite bodies, with fittings other than annular end fittings.

While only specific embodiments of the invention have been described and shown, it is apparent that various additions and modifications can be made thereto. It is, therefore, the intention in the appended claims to cover all such additions and modifications as may fall within the true scope of the invention.

## Claims

1. A composite article (10) comprising:
a pair of spaced fittings (12), each fitting having a support member (42);
a body (14) connecting the two fittings (12) and extending between the support members (42) on the fittings (12), the body (14) including:
an elongate member (40) extending between the support members (42); and
a matrix (41) around the elongate member (40).

2. The composite article of claim 1, wherein the elongate member (40) comprises a fiber (40).

3. The composite article of claim 2, wherein the fiber (40) is selected from the group consisting of glass, carbon, aramid and thermoplastic fibers, and the matrix (41) is selected from the group consisting of thermoplastic and thermoset material.

4. The composite article of claim 2, wherein the support members (42) comprise fiber supports (42) and wherein a single elongate fiber (40) extends over fiber supports (42) on opposite fittings (12) and extends over one fiber support (42) more than once.

5. The composite article of claim 2, wherein each support member (42) comprises a fiber support (42).

6. The composite article of claim 5, wherein each fitting (12) has an outer surface (16) and wherein each fiber support (42) comprises a pin (46) having a portion spaced from the outer surface (16) of the fitting (12) and connected at its ends to the outer surface (16) of the fitting (12), the elongate fiber (40) extending over the portion of the pin (46) spaced from the outer surface (16) of the fitting (12).

7. The composite article of claim 6, wherein the body (14) includes a pair of spaced parallel arms (22) extending between fittings (12) and aligned with fiber supports (42) on opposite fittings, an elongate fiber (40) extending along the length of each arm (22) between the fiber supports (42).

8. The composite article of claim 5, wherein each fitting (12) has an outer surface (16) and wherein each fiber support (42) comprises a shoulder (50) at the outer surface (16) of the fitting (12).

9. The composite article of claim 8, wherein each shoulder (50) includes a retaining lip (54), the elongate fiber (40) disposed between the retaining lip (54) and the outer surface (16) of the fitting (12).

10. The composite article of claim 8, wherein the shoulders (50) have rounded surfaces for supporting the elongate fibers (40).

11. The composite article of claim 1, wherein the article (10) includes a pair of spaced parallel arms (22) extending between the fittings (12), each arm (22) having a longitudinal axis parallel to the axis of the fittings (12), each fitting (12) having a pair of diametrically opposed support members (42), the support members (42) in the opposing fittings (12) being aligned with one arm (22) of the body (14), one elongate member (40) extending along the length of an arm (22) and over the support members (42) of opposite fittings (12).

12. The composite article of any preceding claim, wherein the fittings (12) are made of metal.

13. The composite article of any preceding claim, wherein each fitting (12) comprises an annular end fitting (12) with a threaded interior surface (11).

14. The composite article of claim 13, wherein the composite article (10) is a turnbuckle and the two end fittings (12) are threaded in different directions.

15. A turnbuckle comprising:
a pair of coaxial and spaced annular end fittings (12) having outer surfaces (16) and threaded interior surfaces (11), each end fitting (12) having a pair of fiber supports (42) at its outer surface (16),
each fiber support (42) being aligned with a fiber support (42) on the opposite end fitting (12) and comprising a pair of flanges (44) extending outward from the outer surface (16) of the end fitting (12) and a pin (46) extending between the flanges (44) and spaced from the outer surface (16) of the end fitting (12),
a body (14) connecting the two end fittings (12) and extending over the fiber supports (42) on the end fittings (12), the body (14) including:
an elongate fiber (40) extending between the end fittings (12) and over the pins (46) of the aligned fiber supports (42) on the end fittings (12); and
a matrix (41) around the elongate fibers (40).

16. The turnbuckle of claim 15, wherein an elongate fiber (40) passes over each pin (46) more than once.

17. The turnbuckle of claim 15 or 16, wherein the end fittings (12) are metal, the elongate fiber (40) is selected from the group consisting of glass, carbon, aramid and thermoplastic fibers, and the matrix (41) is selected from the group consisting of thermoplastic and thermoset material.

18. A turnbuckle comprising:
a pair of coaxial and spaced annular end fittings (12) having outer surfaces (16) and threaded interior surfaces (11), each end fitting (12) having a pair of fiber supports (42) at its outer surface (16);
each fiber support (42) being aligned with a fiber support (42) on the opposite end fitting (12) and comprising a shoulder (50) extending outward from the outer surface (16) of the end fitting (12), the shoulder (50) having a curved support surface (52) and a retaining lip (54);
a body (14) connecting the two end fittings (12) and extending over the fiber supports (42) on the end fittings (12), the body (14) including:
an elongate fiber (40) extending between the end fittings (12) and over the curved support surfaces (52) of the aligned shoulders (50) between the retaining lips (54) and the outer surfaces (16) of the end fittings (12); and
a matrix (41) around the elongate fibers (40);

19. The turnbuckle of claim 18, wherein an elongate fiber (40) passes over each shoulder (50) more than once.

20. The turnbuckle of claim 18 or 19, wherein the end fittings (12) are metal, the elongate fiber (40) is selected from the group consisting of glass, carbon, aramid and thermoplastic fibers, and the matrix (41) is selected from the group consisting of thermoplastic and thermoset material.

21. A method of making a composite article (10) comprising the steps of:
providing a pair of fittings (12) each having a fiber support (42);
providing an elongate fiber (40);
placing the fittings (12) in a spaced relationship;
placing the elongate fiber (40) to extend between the fiber supports (42) of the two fittings (12);
introducing a matrix material (41) over the pair of fittings (12) and elongate fiber (40); and
allowing the matrix material (41) to set over the fittings (12) and elongate fiber (40) to form a body (14) connecting the two fittings (12).

22. The method of claim 21, wherein the elongate fiber (40) is selected from the group consisting of glass, carbon, aramid and thermoplastic fibers, and the matrix (41) material is selected from the group consisting of thermoplastic and thermoset material.

23. The method of claim 21 or 22, further including the step of providing a mold of the desired shape of the part and wherein the fittings (12) with elongate fiber (40) are in the mold when the matrix (41) material is introduced.

24. The method of claim 21, 22 or 23, wherein a single elongate fiber (40) is wrapped over the fiber supports (42) more than once.

25. The method of any of claims 21-24, wherein each fitting (12) has a pair of diametrically opposed fiber supports (42) aligned with the fiber supports (42) on the opposite fitting and wherein an elongate fiber (40) is placed on each aligned fiber support (42).

26. The method of any of claims 21-25, wherein the composite article (10) is a turnbuckle and the fittings (12) are annular end fittings (12) with threaded interior surfaces (11), and the end fittings (12) are aligned in a coaxial relationship and the elongate fiber (40) is wrapped over the fiber supports (42).
